# EUROPEAN PATENT APPLICATION

(11) **EP 0 655 639 A1**
(43) Date of publication of application: **31.05.1995**
(21) Application number: 94308769.2
(22) Date of filing: 28.11.1994
(51) Int. Cl.: G02F 1/09

(54) **Optical isolator**

(30) Priority: 26.11.1993 JP 321236/93
(71) Applicant: MITSUBISHI CHEMICAL CORPORATION, Chiyoda-ku, Tokyo 100 (JP)
(72) Inventor: Saito, Junji, c/o Mitsubishi Chemical Corporation, Ushiku-shi, Ibaraki 300-12 (JP); Kaneda, Hideaki, c/o Mitsubishi Chemical Corp., Ushiku-shi, Ibaraki 300-12 (JP)
(74) Representative: Paget, Hugh Charles Edward

(57) **Abstract**

The present invention provides an optical isolator, which has satisfactory isolation performance, is small in size, and can be produced at low cost. The optical isolator of the present invention comprises two polarizing elements consisting of a birefringence crystal plate 11 in forward direction and a glass polarizing plate 13 in backward direction, and a Faraday rotator 12. Because only one glass polarizing plate is required, which is expensive, it can be produced at lower cost while maintaining isolation performance approximately equal to that of a conventional type optical isolator with two glass polarizing plates. Compared with conventional type optical isolator with polarizing beam splitter, the optical isolator of the present invention has better isolation performance and is produced in smaller size. Thus, it is possible to provide an optical isolator, which has satisfactory isolation performance, is small in size, and can be produced at lower cost.

## Description

### BACKGROUND OF THE INVENTION

The present invention relates to an optical isolator, and in particular to a polarization-dependent optical isolator used in optical communication and optical transmission.

In semiconductor laser used in the applications such as optical communication, laser light is reflected at connecting point of optical fiber or on optical component parts and returns to the semiconductor laser. By this so-called returning light, frequency characteristics are decreased or noise increases, and this often leads to difficulties to provide high quality optical transmission. For this reason, an optical isolator is required, which allows the light to pass only in forward direction and shuts off the returning light in backward direction.

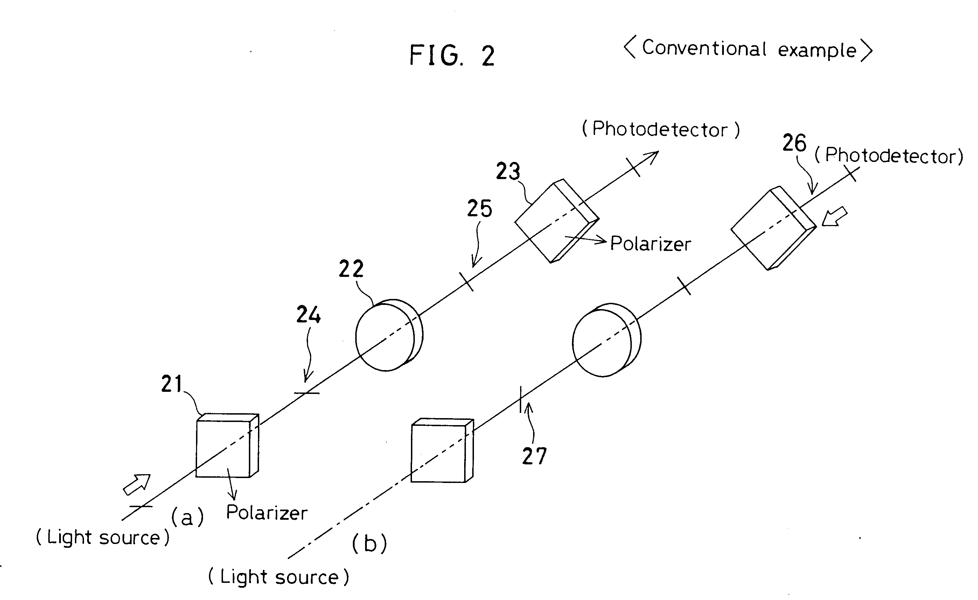

Figs. 2 (a) and (b) each represents schematical perspective view of an arrangement of a polarization-dependent isolator known as a representative optical isolator, showing direction of polarization plane of light in forward and backward directions. This optical isolator comprises a Faraday rotator 22 disposed in the middle, and two polarizing elements, consisting of a polarizer 21 (polarizing element in forward direction) aligned on light source side with respect to the Faraday rotator 22 and an analyzer 23 (polarizing element in backward direction) aligned on opposite side of the light source.

As shown in Fig. 2 (a), incident light coming in forward direction from a light source is generally not polarized. When it passes through a polarizer 21, it is turned to a linearly polarized component only, having a specific plane of polarization due to effect of the polarizer 21. This linearly polarized light 24 passes through Faraday rotator 22 and enters an analyzer 23 after the plane of polarization has been rotated by 45 degrees. Because rotational angular positions of the polarizer 21 and the analyzer 23 around optical axis are determined at such angular relation that the linearly polarized light 25 coming through the Faraday rotator 22 passes through the analyzer 23, and the light coming through the polarizer 21 passes through the analyzer 23 without any substantial loss.

When this optical isolator is integrated with semiconductor laser, polarization plane direction of the light passing through the polarizer 21 is equalized with polarization plane direction of laser light from semiconductor laser.

On the other hand, returning light 26 coming from backward direction toward the analyzer 23 is the polarizing component only, which can pass through the analyzer 23 as shown in Fig. 2(b), and it passes through the analyzer 23. After passing through the analyzer 23, the returning light is further rotated by 45 degree in the same direction as the previous rotation by the Faraday rotator 22. Therefore, the returning light passing through the Faraday rotator 22 is turned to linearly polarized light, which has a plane of polarization deviated by 90 degrees from the laser light 24, which has passed through the polarizer 21 in forward direction. In case the polarizer 21 comprises a glass polarizing plate, the returning light 27 is absorbed by the polarizer 21. In case the polarizer 21 comprises a polarizing beam splitter, the returning light 27 is reflected in perpendicular direction by the polarizer 21. In both cases, the light does not return toward the light source, and this facilitates in providing high quality optical transmission.

In an optical isolator as described above, either a polarizing beam splitter or a polarizing glass is adopted as two polarizing elements. However, in the optical isolator, which has a polarizing beam splitter as the polarizing element, there are problems such as longer optical length or decrease of isolation performance due to incident angle of light. On the other hand, in the optical isolator, which has two glass polarizing plates as the polarizing element, manufacturing cost is too expensive.

To solve the above problems, it is an object of the present invention to provide an optical isolator, which has short optical length, has its isolation performance not reduced due to incident angle and can be produced at low cost.

To attain the above object, the optical isolator according to the present invention basically comprises
birefringence crystal plate, Faraday rotator and glass polarizing plate.

Also, the optical isolator of the present invention is characterized in that the birefringence crystal plate, Faraday rotator and glass polarizing plate are aligned in this order on optical axis along illuminating direction of light from a light source.

As the Faraday rotator in the optical isolator of the present invention, any Faraday rotator can be used regardless of its shape or magnetic material.

As the birefringence crystal plate, a rutile birefringence crystal plate or a calcite birefringence crystal plate can be used.

The optical isolator of the present invention is provided only with a single expensive glass polarizing plate, and it can be produced at lower cost than conventional type optical isolator, which has two glass polarizing plates. On the other hand, unlike the optical isolator having polarizing beam splitter, it can be produced with shorter optical length, and isolation performance is not decreased due to incident angle of laser light.

### BRIEF DESCRIPTION OF THE DRAWINGS

Figs. 1 (a) and (b) each represents a schematical perspective view of arrangement of an optical isolator of an embodiment of the present invention together with polarizing direction of light in forward and backward directions; and
Figs. 2 (a) and (b) each represents a schematical perspective view of arrangement of a conventional type optical isolator together with polarizing direction of the light in forward and backward directions.

In the figures, reference numeral 11 represents a forward direction polarizing element (polarizer), 12 a Faraday rotator, 13 a backward direction polarizing element (analyzer), 14 and 15 each represents light in forward direction, and 16 and 17 each represents light in backward direction.

### DETAILED DESCRIPTION OF THE PREFERRED EMBODIMENTS

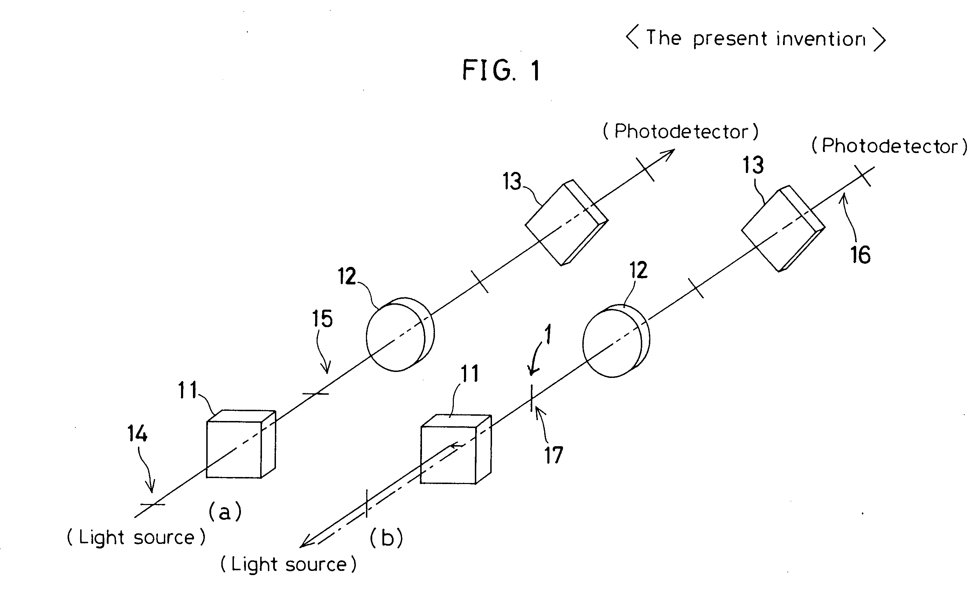

In the following, detailed description will be given on the present invention in connection with the drawings. Figs. 1 (a) and (b) each represents a schematical perspective view, showing arrangement of an optical isolator of an embodiment of the present invention. Fig. 1 (a) schematically shows a plane of polarization of light in forward direction, and Fig. 1 (b) shows a plane of polarization of light in backward direction. The optical isolator of the present embodiment basically comprises a birefringence crystal plate 11, serving as a forward direction polarizing element, a Faraday rotator 12, and a glass polarizing plate 13, serving as a backward direction polarizing element. In addition, there are provided a cylindrical magnet for supplying saturated magnetic field to the Faraday rotator 12 and an external frame (not shown) to enclose the entire system. In the figure, a semiconductor laser serving as a light source is aligned at left below, and a photodector for receiving laser light is aligned at right above for each system.

As shown in Fig. 1 (a), laser light 14 from the semiconductor laser comprises only a polarizing component, which has a specific plane of polarization. In general, when light passes through a birefringence crystal plate, it is separated to two linearly polarized light beams consisting of an ordinary ray and an extraordinary ray. However, when the birefringence crystal plate is rotated around optical axis to equalize the polarization plane direction of the light passing through the birefringence crystal plate (hereinafter called "direction of birefringence crystal plate) with polarization plane direction of the ordinary ray or the extraordinary ray, the laser light passes through without being separated. In this case, as shown in Fig. 1 (a), when direction of the birefringence crystal plate 1 is equalized with polarization plane direction of the ordinary ray, the laser light 14 is illuminated straightly and passes through it. When the direction is equalized with polarizing direction of the extraordinary ray, the laser light 14 is moved in parallel and passes through it.

In both cases, the transmission light 15 through the birefringence crystal plate 11 passes through the Faraday rotator 12. If the plane of polarization is rotated by 45 degrees and direction of the glass polarizing plate 13 is equalized in advance with the direction of polarization plane, transmission light through Faraday rotator 12 passes through the glass polarizing plate 13 without any substantial loss.

On the other hand, of the returning light 16, returning to the optical isolator from backward direction as shown in Fig. 1 (b), only the polarizing component, which agrees with the direction of the glass polarizing plate 13, can pass through. When this polarized light passes through the Faraday rotator 12, its plane of polarization is rotated further by 45 degrees. Thus, the returning light 17 passing through the Faraday rotator 12 has a plane of polarization crossing perpendicularly that of the laser light 15, which has passed through the birefringence crystal plate in forward direction.

For this reason, when the laser light 14 in forward direction is equalized with the direction of the ordinary ray of the birefringence crystal plate 11, the returning light 17 in backward direction is turned to an extraordinary ray and is moved in parallel. When the laser light 14 in forward direction is equalized with direction of the extraordinary ray of the birefringence crystal plate 1, the returning light 17 in backward direction is turned to an ordinary ray and advances straightly. In both cases, the returning light 17 is moved in parallel from the laser light 14 in forward direction and does not return to the semiconductor laser directly. Moreover, because its plane of polarization crosses perpendicularly the plane of polarization of the semiconductor laser, frequency characteristics of the semiconductor laser is decreased by this returning light. Accordingly, no disturbance occurs such as increase of noise.

For the optical isolator of the above embodiment, only one expensive glass polarizing plate is used, and it can be produced at lower cost than conventional type optical isolator, which uses two glass polarizing plates. Also, it has shorter optical length than the optical isolator using beam splitter, and this contributes to compact design when it is incorporated in semiconductor laser.

In case a birefringence crystal plate is used as polarizer, the larger the separation width between ordinary ray and extraordinary ray is, the better the characteristics of the polarizer are, and the more the isolation of the optical isolator increases.

Because separation width depends upon separation angle and thickness of birefringence crystal plate, it is preferable to use a material with wider separation angle in order to design optical isolator in small size.

Separation angle is determined by the difference between refractive index of extraordinary ray ( nₑ ) and that of ordinary ray ( nₒ ). The greater the difference ( Δn ) is, the wider the separation angle is.

As the materials usable for this purpose, there are:
Rutile (TiO₂) Δn = 0.25
Calcite (CaCO₃) Δn = 0.17
YVO₄ (RVO₄; R represents a rare earth element.) Δn = 0.20
MgTa₂O₆ Δn = 0.11

Quartz crystal (SiO₂) is also one of the representative birefringence materials. However, it is not very desirable as birefringence crystal plate because it has Δn of less than 0.01.

Optical isolators of the examples of the present invention and optical isolators of comparative examples have been produced on trial, and the performance characteristics have been evaluated.

### (Example 1)

In the optical isolator of Example 1, a rutile birefringence crystal plate of 1 mm in thickness was adopted as the forward direction polarizing element, a bismuth substituted iron garnet as the Faraday rotator, and a glass polarizing plate as the backward direction polarizing element. Its size was 3 mm in diameter, and 3.2 mm in total optical length. A polarization maintaining fiber, a pin hole of 2 µm, a lens, an optical isolator of Example 1, and a single mode fiber with 10 µm core were aligned in this order and were optically coupled. Then, light with wavelength of 1.3 µm was illuminated from the direction of the single mode fiber, and isolation was measured. The measured isolation was 40 dB.

Isolation is calculated by subtracting backward coupling loss (dB) from forward direction insertion loss (dB) of the optical isolator. The insertion loss was obtained from the difference of optical coupling between the case where optical isolator is present and the case where it is not by illuminating light with wavelength of 1.3 µm from the direction of the polarization maintaining fiber.

### (Example 2)

For the optical isolator of Example 2, a calcite birefringence crystal plate of 1 mm in thickness was adopted as the forward polarizing element, a bismuth substituted iron garnet as the Faraday rotator, and a glass polarizing plate as the backward polarizing element. Its size was 3 mm in diameter and 3.2 mm in total optical length. These components were aligned in the same manner as in Example 1, and isolation was measured as 40 dB.

### (Comparative example 1)

For the optical isolator of Comparative example 1, a polarizing beam splitter of 2 mm square was adopted each as polarizer and analyzer, and a bismuth substituted iron garnet wad adopted for Faraday rotator. Its size was 5 mm in diameter and 6 mm in optical length. These components were aligned in the same manner as in Example 1, and isolation was measured as 35 dB.

### (Comparative example 2)

For the isolator of Comparative example 2, a glass polarizing plate was adopted as polarizer and analyzer, and bismuth substituted iron garnet as Faraday rotator. Its size was 3 mm in diameter and 3 mm in optical length. These components were aligned in the same manner as in Example 1, and isolation was measured as 44 dB.

### (Comparative example 3)

For the optical isolator of Comparative example 1, a rutile birefringence crystal plate of 1 mm in thickness was adopted each as polarizer and analyzer, and a bismuth substituted iron garnet as Faraday rotator. Its size was 3 mm in diameter and 3.7 mm in optical length. These components were aligned in the same manner as in Example 1, and isolation was measured as 30 dB.

From the results of the above measurements, it was confirmed that the optical isolators of the above embodiments have isolation performance approximately equal to that of the optical isolator, for which glass polarizing plates were used as polarizer and analyzer, and that it has better isolation performance compared with the optical isolator, for which birefringence crystal plates were used as polarizer and analyzer.

The embodiments and aspects described above are simply given for illustrative purpose, and it is needless to say that the optical isolator of the present invention can be modified or changed without deviating from the spirit and the scope of the present invention.

As described above, it is possible according to the optical isolator of the present invention to produce at lower cost than the optical isolator using glass polarizing plates as polarizer and analyzer while maintaining the same isolation performance as the latter. Because it has better isolation performance and shorter optical length than the optical isolator using polarizing beam splitter, the present invention can attain remarkable effect in providing an optical isolator, which has satisfactory performance characteristics, is small in size and can be produced at lower cost.

## Claims

1. An optical isolator, basically comprising one each of birefringence crystal plate, Faraday rotator and glass polarizing plate.

2. An optical isolator, comprising a birefringence crystal plate, a Faraday rotator and a glass polarizing plate aligned in this order on optical axis along illuminating direction of light from a light source.
